# EUROPÄISCHE PATENTANMELDUNG

(11) **EP 0 794 139 A2**
(43) Veröffentlichungstag der Anmeldung: **10.09.1997**
(21) Anmeldenummer: 97101587.0
(22) Anmeldetag: 01.02.1997
(51) Int. Cl.: B65G 57/30

(54) **Vorrichtung zum Stapeln und Entstapeln von Gegenständen, insbesondere Warenbehàltern oder Flaschenkästen.**

(30) Priorität: 08.03.1996 DE 19608956
(71) Anmelder: Leifeld und Lemke Maschinenfabrik GmbH & Co. KG, D-32120 Hiddenhausen (DE)
(72) Erfinder: Budde, Peter, 49088 Osnabrück (DE)

(57) **Zusammenfassung**

Die Erfindung betrifft eine Vorrichtung zum Stapeln und Entstapeln von Gegenständen, insbesondere Warenbehältern oder Flaschenkästen, mit daran seitlich verlagerbaren angreifenden Greifern zum Erfassen, Anheben und Absetzen mindestens eines Gegenstandes, mit der höchste Durchsatzleistungen mit geringem Aufwand zu erzielen sind. Dies wird dadurch erreicht, daß das seitliche Verlagern der Greifer (7;7 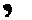 ) zum Anheben durch deren Schwer- und/oder Trägheitskraft erfolgt, so daß sie sich dadurch an dem mindestens einen Gegenstand (B) abstützen, daß das seitliche Verlagern der Greifer (7;7 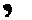 ) nach dem Absetzen auf dem mindestens einen darunter befindlichen Gegenstand (B) durch Abwärtsgleiten auf den Längsseiten des Stapels (S) erfolgt, daß den Greifern (7;7 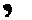 ) auf einer jeden Seite eine eigenständige Hubvorrichtung (2 bzw. 2 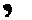 ) zugeordnet ist, die mit der jeweils anderen nicht meachnisch zur Einleitung der Bewegung gekoppelt ist, und daß mindestens einem Greifer (7;7 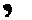 ) eine Stellvorrichtung (8;8 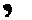 ) zugeordnet ist, mit der die Parallelstellung der zwei spiegelbildlich zueinander angeordneten Greifer (7;7 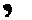 ) sicherzustellen ist.

## Beschreibung

Die Erfindung betrifft eine Vorrichtung zum Stapeln und Entstapeln von Gegenständen, insbesondere Warenbehältern oder Flaschenkästen, gemäß dem Oberbegriff des Anspruchs 1

Eine Vorrichtung der gattungsgemäßen Art ist aus der DE 93 90 249 U1 bekannt. Sie zeichnet sich unter anderem dadurch aus, daß an einem Basisteil in bezug zu diesem vertikal verfahrbar ein Rahmenteil angeordnet ist, der die Greifer trägt, wobei die Greifer in bezug auf den Rahmenteil seitlich bewegt werden können, und daß die Bewegung der Greifer in bezug auf den Rahmenteil durch auf einer Schloßplatte angeordnete Zwangsführungen bestimmt wird, die die Greifer in bestimmte Stellungen in Relation zu dem Rahmenteil bewegen können, während der Rahmenteil vertikal verfährt, und daß jede Zwangsführung auf einer Seite einer Schloßplatte angeordnet ist, die zwei verschiedene Zwangsführungen auf einander gegenüberliegenden Seiten trägt.

Zum Greifen und Heben der Gegenstände ist nur eine Hebeeinrichtung erforderlich, jedoch ist die für die beiden Bewegungen, nämlich vertikale Hubbewegung und seitliche Verlagerungsbewegung zwecks Erzielung der Greifbewegung, notwendige Kinematik zu beachten, da beide Bewegungsformen miteinander mechanisch gekoppelt und aufjeder Seite eines zu greifenden Gegenstandes, ausgehend von einem einzigen Antrieb, zu realisieren sind.

In der DE-GM 72 02 253 ist eine Vorrichtung zum Stapeln von blockartigen Gegenständen beschrieben, in der die an Lenkern angelenkten Greifer von einem gemeinsamen Antrieb an vertikalen Trägern in ihrer Hubhöhe verfahren werden.

Die Kinematik der beiden vorgenannten bekannten Vorrichtungen bedingt einen entsprechenden Bauaufwand, Verschleiß und Wartung. Die Massen und die durch sie hervorgerufenen Trägheitskräfte sind oft ein limitierendes Element bei der Realisierung wünschenswert hoher Durchsatzleistungen beim Betrieb.

In der DE 32 33 180 A1 ist eine Vorrichtung zum Stapeln von Flaschenkästen beschrieben, bei der die einem Stapel zugeordneten Greifer aus einer kasterfernen Bereitschaftsstellung in eine kastennahe Eingriffsstellung durch einen nicht gezeigten Antrieb für die Stützen, an denen der oder die Greifer jeweils befestigt sind, in horizontaler Richtung bewegt werden. Desgleichen vermag der Antrieb die Stützen in vertikaler Richtung zu verfahren. Die Druckschrift offenbart nicht, wie mit einem einzigen Antrieb sowohl die horizontale als auch die vertikale Verfahrbewegung der Greifer mit möglichst geringem Bauaufwand realisiert werden kann, wenn gleichzeitig die Forderung nach hoher Durchsatzleistung erfüllt werden soll.

Des weiteren ist eine Vorrichtung zur Formung von mehrlagigen Stapeln und/oder zur Entstapelung von Gegenständen bekannt (DE 41 09 293 A1), bei der die Gegenstände mittels an Trägern angeordneten Auftnahmevorrichtungen von unten gefaßt, gestützt und in vertikaler Richtung bewegt werden. Bei diesem Prinzip ist zwar lediglich eine vertikale Transportbewegung der beiden Aufnahmevorrichtungen beiderseits des Gegenstandes sicherzustellen, jedoch muß diese Bewegung, ausweislich der Figur 1 der Druckschrift, durch die hierzu notwendigen mechanischen Einrichtungen synchronisiert werden. Die Träger mit ihren Aufnahmevorrichtungen greifen bei der Handhabung eines Gegenstandes durch den Förderbereich hindurch. Solange diese Handhabung anhält und solange der vorhergehende Gegenstand nicht abgelegt und die Träger mit ihren Aufnahmevorrichtungen nicht in ihre Ausgangs- und damit Aufnahmeposition zurückgekehrt sind, ist ein Einfahren eines weiteren Gegenstandes in den Stapelbereich, beispielsweise beim Stapeln, nicht möglich.

Es ist Ziel der vorliegenden Erfindung, eine Vorrichtung zum Stapeln oder Entstapeln von Gegenständen, insbesondere Warenbehältern oder Flaschenkästen, mit daran seitlich verlagerbaren angreifenden Greifern zum Erfassen, Anheben und Absetzen mindestens eines Gegenstandes so zu schaffen, daß höchste Durchsatzleistungen mit geringem Aufwand zu erzielen sind.

Dieses Ziel wird durch eine Vorrichtung mit den Merkmalen des Anspruchs 1 erreicht.

Vorteilhafte Ausgestaltungen der Vorrichtung sind Gegenstand der abhängigen Ansprüche.

Die vorgeschlagenen Mittel zur Erreichung des gesteckten Zieles sind ebenso einfach wie wirkungsvoll. Die bei der Handhabung der Gegenstände bzw. eines Stapels wirksamen Kräfte werden genutzt, um in der Eingriffsstellung der Greifer deren Kraft- und/oder Formschluß mit dem jeweiligen Gegenstand sicherzustellen. Diese Kräfte resultieren in erster Linie aus der Schwerkraft des Gegenstandes oder des Stapels und aus der Trägheitskraft von deren Massen. Die Kräfte stützen sich derart über die Greifer ab, daß letztere stets gegensinnig zueinander auf den zwischengelagerten Gegenstand bewegt werden. Hierzu ist lediglich erforderlich, daß jeder Greifer in bezug auf die ihm zugeordnete eigenständige Hubvorrichtung derart angelenkt ist, daß sich der Abstand der Greifer zueinander unter dem Einfluß der Schwer- und/oder Massenträgheitskraft verkürzt. Die Greif- und Haltebewegung wird zusätzlich noch durch die am Greifer angreifende eigene Massenträgheitskraft unterstützt.

Jedem Greifer auf einer jeden Seite ist eine eigenständige Hubvorrichtung zugeordnet, die von der jeweils anderen unabhängig ist, wobei diese Hubvorrichtungen unabhängig voneinander verfahr- und positionierbar sind, d.h. jeweils ein eigenes Antriebsaggregat aufweisen. Aus diesem Sachverhalt, der Entkopplung der Hubvorrichtungen, erwächst zum einen der einfache kinematische Aufbau der Vorrichtung, zum anderen ergibt sich hieraus die einfache Anpassung der Vorrichtung an die gängigen Abmessungen der verschiedenen zum Einsatz kommenden Gegenstände. Die Anpassung erfolgt beispielsweise dadurch, daß jeder Greifer in Verbindung mit seiner Führungs- und Hubvorrichtung in einem Rahmenteil angeordnet ist, und daß die Rahmenteile auf einem Bodenteil parallel und mit, insbesondere in Stufen, veränderbarem Abstand zueinander angeordnet sind. Die angestrebte Vereinfachung der Vorrichtung erschöpft sich allerdings nicht in der Entkopplung der beiden Hubvorrichtungen für die Greifer und die daraus resultierende Möglichkeit, die Greiferkinematik stark zu vereinfachen, sondern sie läßt sich darüber hinaus oberhalb des vorgenannten Bodenteiles symmetrisch aufbauen, so daß die Anzahl der notwendigen unterschiedlichen Bauteile erheblich reduziert ist.

Wie vorstehend dargelegt, vollzieht sich die Greif- und Haltebewegung der Greifer unter dem Einfluß der Massenträgheits- und/oder Schwerkraft selbsttätig, und zwar gleichgültig, ob es sich um die Hubbewegung im Ausmaß um etwas mehr als das Höhenmaß eines Gegenstandes handelt (Stapeln) oder um ein geringes Anheben des zweiten Gegenstandes oberhalb des ersten zur Trennung derselben, falls ein formschlüssiger Eingriff zwischen beiden besteht (Entstapeln). Ebenfalls ohne zusätzliche Antriebsbewegung ist das Umsetzen der Greifer aus ihrer Position nach Vollzug der vorgenannten Hubbewegungen in eine Ausgangsposition im Bereich eines unmittelbar auf einer Fördervorrichtung plazierten ersten Gegenstandes möglich. Diese Verfahrbarkeit in Richtung auf die Fördervorrichtung zu ist immer dann möglich, wenn sich der Stapel auf der Fördervorrichtung abstützt. Beim Abwartsgleiten der Greifer aufden Längsseiten des Stapels werden diese selbsttätig so weit voneinander entfernt, daß der Kraftschluß und/oder der gegebenenfalls bestehende Formschluß zwischen Greifer und Gegenstand aufgehoben ist.

Da die für die Sicherstellung der Greif- und Haltebewegung maßgeblichen Kräfte stets und augenblicklich verfügbar sind (die Schwerkraft wirkt im Moment des Eingriffs der Greifer und die Massenträgheitskräfte sind augenblicklich wirksam, wenn sich die gewünschten Beschleunigungen zunächst am Greifer und anschließend an dem Gegenstand einstellen), lassen sich mit der Vorrichtung höchste Durchsatzleistungen erreichen.

Es hat sich als vorteilhaft erwiesen, die notwendige synchrone translatorische Höhenverstellung der Greifer mittels Hubvorrichtungen zu realisieren, die derart ansteuerbar sind, daR eine der beiden, mechanisch unabhängig von der anderen, führt (Master-Antrieb) und die andere im Rahmen zulässiger Toleranzen sklavisch abhängig folgt (Slave-Antrieb). Man spricht in diesem Zusammenhang auch von Antrieben, die über eine sogenannte "elektronische Welle" miteinander gekoppelt sind.

Um eine Parallelstellung der beiden Greifer zueinander und ihre parallele Führung in jeder beliebigen Lage zwischen ihrer Freigabe- und Eingriffsstellung sicherzustellen, sieht eine weitere vorteilhafte Ausführungsform der Vorrichtung vor, daß jeder Greifer über ein Paar zueinander parallele Doppellenker an zwei aufjeder Greiferseite vorgesehene, beabstandete Schlitten, die auf den Führungsbahnen bewegbar sind, angelenkt ist. Dabei ist jedes Paar Doppellenker über zwei Achsen, an denen sie starr befestigt sind, miteinander verbunden und zusammen können sie dadurch die jeweiligen Greifer in der vorbeschriebenen Weise verkantungsfrei führen.
Um das Einfahren eines Gegenstandes oder mehrerer Gegenstände hintereinander (Stapelvorgang) oder eines Stapels (Entstapelung) in das Greiferpaar zu erleichtern oder eine hinreichend bemessene Freigabestellung in all den Fällen sicherzustellen, wo neben dem Kraftschluß zwischen Greifer und Gegenstand auch ein Formschluß erreicht werden soll oder muß, sieht eine andere Ausgestaltung der Vorrichtung vor, daß jedem Greifer eine Stellvorrichtung zugeordnet ist, über die er zwangsläufig in die und aus der Eingriffsstellung verbringbar ist. In diesem Zusammenhang wird dafür Sorge getragen, daß die Greif- und Haltebewegung der Greifer unter dem Einfluß der Schwer- und/oder Massenträgheitskräfte durch diese Stellvorrichtung nicht beeinträchtigt wird.

Die Anpassung der Vorrichtung an die gängigen Abmessungen der verschiedenen zum Einsatz kommenden Gegenstände erfolgt, wie dies eine andere vorteilhafte Ausgestaltung der Vorrichtung vorsieht, dadurch, daß der Abstand der Rahmenteile voneinander, in denen die Greifer in Verbindung mit ihren Führungs- und Hubvorrichtungen angeordnet sind, in Stufen oder stufenlos veränderbar ist. Dort, wo die Betriebsabläufe in kürzeren Zeitabständen eine Anpassung der Vorrichtung an die zu handhabenden Gegenstände erforderlich machen, sieht eine weitere vorteilhafte Ausgestaltung der Vorrichtung vor, daß die Rahmenteile auf dem Bodenteil verfahrbar geführt angeordnet sind.

Die Vorrichtung ist aufgrund des einfachen Greiferaufbaues ohne weiteres geeignet, wie dies gemäß einer weiteren Ausgestaltung der vorgeschlagenen Vorrichtung vorgesehen ist, mehr als einen Stapel gleichzeitig zu erfassen und zu handhaben. Dabei werden Maßabweichungen der Gegenstände in unterschiedlichen Stapeln, die zu Betriebsstörungen führen können, weil der Greifer kleinere Gegenstände unter Umständen nicht hinreichend preßt und festhält, durch eine nachgiebige, elastische Auflage, mit der die relevante Greiferoberfläche armiert ist, wirksam überbrückt und kompensiert.

Ein Ausführungsbeispiel der vorgeschlagenen Vorrichtung ist in der Zeichnung dargestellt und wird nachfolgend beschrieben. Darüber hinaus wird die grundsätzliche Handhabung der Gegenstände mit der Vorrichtung bei ihrem automatischen Stapeln und Entstapeln schematisch dargestellt und erläutert.
Es zeigen
- Figur 1: in schematischer Darstellung eine Draufsicht auf die Vorrichtung mit zwei im Stapelbereich angeordneten Gegenständen;
- Figur 2: ebenfalls in schematischer Darstellung einen Querschnitt durch die Vorrichtung gemaß Figur 1 entsprechend dem dort gekennzeichneten Schnittverlauf A-C;
- Figur 3: in schematischer Darstellung die Handhabung von Gegenständen mit der Vorrichtung im Zuge der Formung eines Stapels (Stapeln);
- Figur 4: ebenfalls in schematischer Darstellung die Handhabung eines Stapels mit der Vorrichtung gemäß den Figuren 1 und 2 im Zuge der Trennung in einzelne Gegenstände (Entstapeln) und
- Figur 5: in vergrößerter und detaillierterer Darstellung einen Ausschnitt aus der Vorrichtung gemäß Figur 2 im Bereich des Greifers und der zugeordneten Doppellenker.

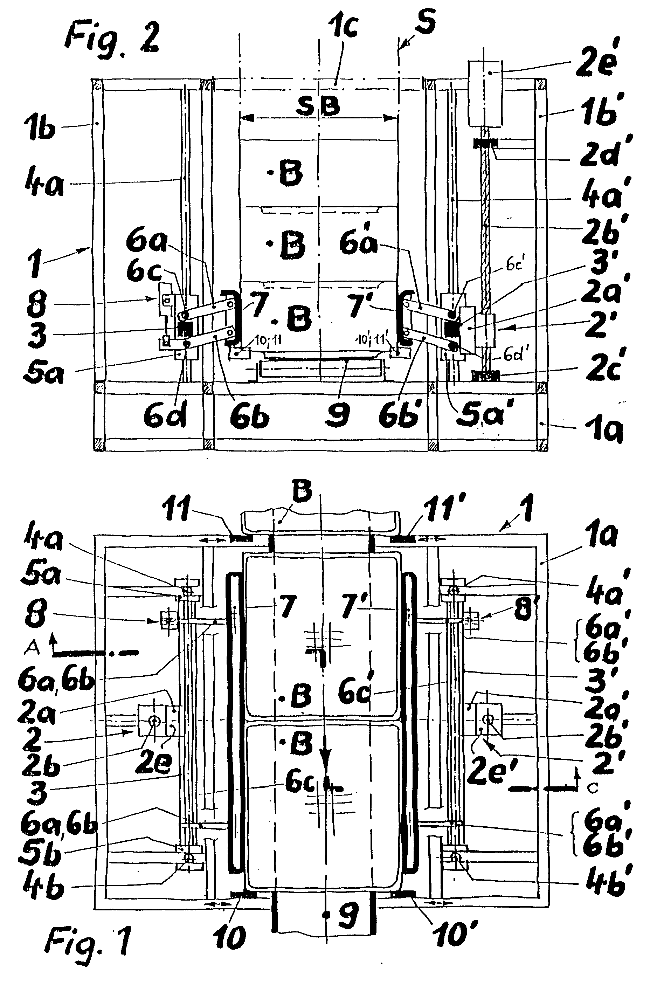

Ein Geräterahmen 1 (Figuren 1 und 2) besteht aus einem Bodenteil 1a und zwei darauf angeordneten, sowohl in ihrem Aufbau als auch in ihrer Ausstattung identischen Rahmenteilen 1b und 1b', die auf einer Seite der Vorrichtung über ein Verbindungsteil 1c miteinander versteift sind. Aufgrund der symmetrischen Anordnung wird nachfolgend überwiegend nur auf die Bauteile des linksseitigen Rahmenteiles 1b Bezug genommen, an dem Bezugszeichen ohne "Strich" verwendet werden. Im Rahmenteil 1b sind, im Abstand voneinander, zwei vertikale Führungsbahnen 4a und 4b angeordnet, auf denen ein Schlitten 5a bzw. 5b bewegbar geführt ist. Die Schlitten 5a, 5b sind über eine Traverse 3 miteinander verbunden, und die Ebene, in der sich die Führungsbewegung der Schlittenanordnung vollzieht, verläuft parallel zur Laufrichtung einer Fördervorrichtung 9, beispielsweise einem Endlos-Förderband, die den Geräterahmen 1 in seiner Symmetrieachse, parallel zur Aufstellungsfläche der Vorrichtung, durchsetzt. Parallel zur Traverse 3, jeweils einerseits oberhalb und andererseits unterhalb, sind zwei Achsen 6c und 6d vorgesehen, die ihre beiderseitige Lagerung jeweils in den Schlitten 5a, 5b finden. Jede Achse 6c, 6d trägt, vorzugsweise im Bereich des benachbarten Schlittens 5a, 5b, einen Lenker 6a bzw. 6b, wobei jeweils die Lenker 6a, 6b einer Seite übereinander angeordnet und zueinander parallel sind. Diese sogenannten Doppellenker 6a, 6b einer jeden Seite sind jeweils mit einem Greifer 7 verbunden. Das Paar zueinander parallele Doppellenker 6a, 6b stellt in dieser Anordnung in Verbindung mit den Achsen 6c und 6d sicher, daß der Greifer 7 nach oben und unten verschwenkt werden kann, wobei dabei seine einem Stapelbereich SB zwischen den Rahmenteilen 1b und 1b' zugewandte Greiferfläche stets senkrecht orientiert bleibt. Die abwärts gerichtete Schwenkbewegung des Greifers 7 in Verbindung mit den Doppellenkern 6a, 6b wird durch einen nicht näher bezeichneten Anschlag oder durch Anlage an einem im Stapelbereich SB befindlichen Gegenstand B begrenzt. In jedem dieser Fälle weisen die Doppellenker 6a, 6b einen von außen nach innen aufsteigenden Verlauf auf. Jedem Greifer 7, 7' ist eine Stellvorrichtung 8 bzw. 8' zugeordnet, über die er zwangsweise in eine Freigabestellung, in der zwischen ihm und dem Gegenstand B ein bestimmter Abstand vorliegt oder seine Eingriffsstellung, in der ein Kraft- und/oder Formschluß zwischen Greifer 7 und Gegenstand B gegeben ist, verbringbar ist. Die Anordnung hinsichtlich der Stellvorrichtungen 8,8' ist so getroffen, daß durch sie die selbsttätige Greif- und Haltebewegung der Greifer 7, 7' unter der Wirkung der Schwer- und/oder Massenträgheitskräfte nicht behindert wird.

Um die Bewegung der Schlitten 5a, 5b und des zugeordneten Greifers 7 in Verbindung mit dem Paar Doppellenker 6a, 6b längs eines im Stapelbereich SB befindlichen Stapels S in die erforderliche Höhenlage sicherzustellen, sind eine Hubvorrichtung 2 (im Rahmenteil 1b) und eine weitere 2' (im Rahmenteil 1b') vorgesehen, wobei jede dieser Hubvorrichtungen 2, 2' aus einem Hubwagen 2a bzw. 2a', einer diesen in vertikaler Richtung durchsetzenden Spindel 2b bzw. 2b', Spindellagern 2c, 2d bzw. 2c 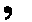 , 2d 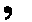 für deren Lagerung und einem Motor 2e bzw. 2e' besteht. Der Hubwagen 2a ist in der Mitte der Traverse 3 mit dieser fest verbunden. Die gleiche Anordnung ist zwischen Hubwagen 2a' und Traverse 3' getroffen.

Wie die Figuren 1 und 2 zeigen, befinden sich in der Vorrichtung zwei Gegenstände B hintereinander, wobei sich die Fördervorrichtung 9 in der Regel fortwährend bewegt. Damit die Gegenstände B in der gezeigten Lage zwischen den Greifern 7 und 7' verbleiben, sind steuerbare Anschläge 10,10' vorgesehen, die eine Anschlagposition für die in die Vorrichtung einlaufenden Gegenstände B bilden. Auf der anderen Seite des Geräterahmens 1 sind weitere steuerbare Anschläge 11, 11' vorgesehen, die eine Anschlagposition für nachfolgende Gegenstände B darstellen. Die letztgenannten steuerbaren Anschläge 11 und 11' sorgen für eine sichere Trennung der in der Vorrichtung zur Handhabung anstehenden von den nachfolgend ebenfalls noch zu handhabenden Gegenständen B.

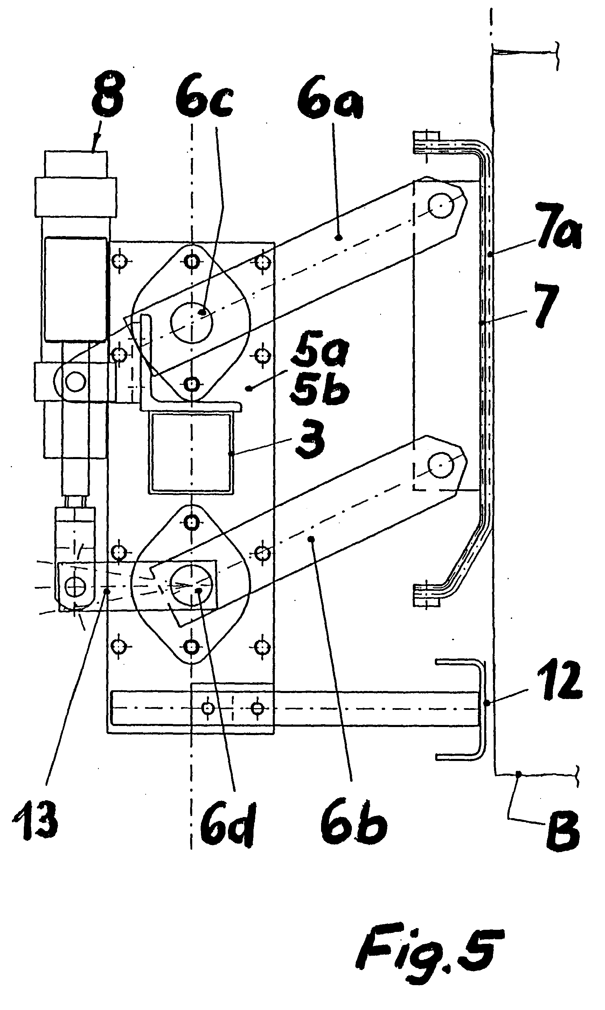

In Figur 5 ist die Anordnung des Greifers 7 über die Doppellenker 6a und 6b an den Schlitten 5a bzw. 5b detaillierter verdeutlicht. Man erkennt, daß die Stellvorrichtung 8 gelenkig an der Traverse 3 angeordnet ist und über einen Stellhebel 13 an der unteren Achse 6d angreift. In der gezeigten Stellung befindet sich der Greifer 7 in seiner Eingriffsstellung mit einem Gegenstand B. Damit die Gegenstände B beim Einlaufen in den Geräterahmen 1 sicher geführt werden, ist eine vom Eintritt bis zum Austritt aus dem Geräterahmen 1 sich erstreckende Führungsschiene 12 vorgesehen. Abmessungsunterschiede zwischen beispielsweise zwei gleichzeitig zu greifenden Gegenständen B werden durch eine elastische Auflage 7a, mit der der Greifer 7 armiert ist, beherrscht. Darüber hinaus gewährleistet die Auflage 7a sicheres und schonendes kraftschlüssiges Greifen und Halten des Gegenstandes bzw. der Gegenstände.

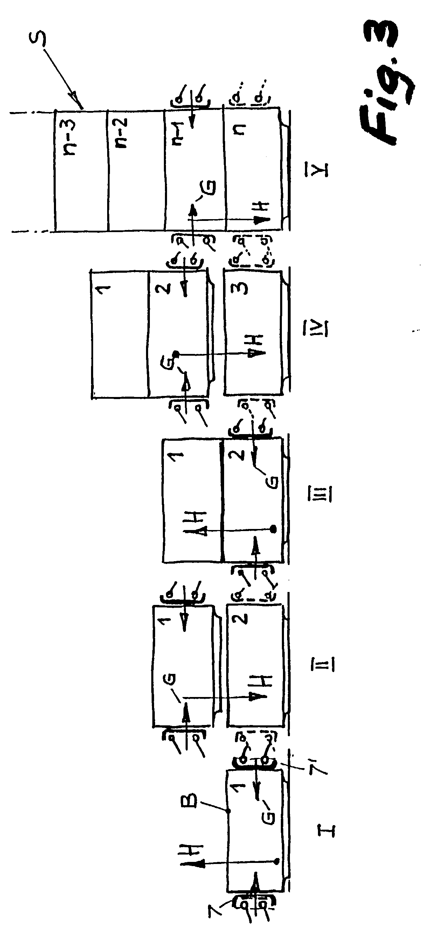

Die Handhabung der Gegenstände B im Zuge des Stapelns verdeutlicht die Darstellung gemäß Figur 3. Ein Gegenstand B oder auch mehrere Gegenstände B hintereinander, falls die Vorrichtung hierfür dimensioniert ist, werden über die Fördervorrichtung 9 in die Vorrichtung eingefahren und über die vorstehend erwähnten steuerbaren Anschläge 10 und 10' in Position gebracht (Situation I, Figur 3). Um ein störungsfreies Einfahren der Gegenstände B zwischen die Greifer 7, 7' sicherzustellen, werden diese über die Stellvorrichtung 8 bzw. 8' in ihre Freigabestellung verbracht oder aber die Greifer 7, 7' werden in Verbindung mit ihren Doppellenkern 6a, 6b so weit nach unten gegen einen nicht näher dargestellten Anschlag verfahren, daß diese Freigabestellung vorliegt. Alsdann werden die beiden Hubvorrichtungen 2, 2' angesteuert und um einen Hub H, der etwas mehr als das Höhenmaß des Gegenstandes B ausmacht, zügig nach oben verfahren. Dabei legen sich die Greifer 7, 7' aufgrund der an ihnen wirkenden Massenträgheitskräfte und ihrer kinematischen Anlenkung über die Doppellenker 6a, 6b selbsttätig an dem Gegenstand B an (Eingriffstellung G: Greifen und Pressen). Die Situation II in Figur 3 zeigt die Endlage des mit 1 gekennzeichneten Gegenstandes B, in der ein zweiter Gegenstand B, gekennzeichnet mit 2, über die Fördervorrichtung 9 in die Position verbracht werden kann, die zuvor von dem mit 1 gekennzeichneten Gegenstand eingenommen wurde. Alsdann wird der nach wie vor gegriffene und gepreßte Gegenstand 1 abgesenkt. Die Greifer 7, 7' werden um den Hub H nach unten verfahren. Sobald sich der Gegenstand 1 auf dem Gegenstand 2 abstützt, löst sich die Eingriffstellung G, und die Greifer 7, 7' lassen sich längs der Gegenstände 1, 2 in Richtung auf die Fördervorrichtung 9 zu unter Aufhebung des Kraft- und/oder Formschlusses verfahren. Die Endlage der Greifer 7, 7' ist in Situation III dargestellt. Nunmehr wiederholt sich der bereits in Situation I beschriebene Hubvorgang mit dem Hub H. Allerdings heben nun die Greifer 7, 7' sowohl den Gegenstand 2 als auch den darüber gestapelten Gegenstand 1 an. In Situation IV erfolgt ein Absenken des Gegenstandes 2 und 1 auf den zwischenzeitlich in die freigewordene Position eingefahrenen Gegenstand 3, entsprechend dem bereits unter Situation II beschriebenen Vorgang. Sobald sich die Gegenstände 2 und 1 auf dem Gegenstand 3 abstützen, lassen sich die Greifer 7, 7' längs der Gegenstände 2 und 3 in Richtung auf die Fördervorrichtung 9 zu unter Aufhebung des Kraftschlusses und/oder des ggf. vorliegenden Formschlusses verfahren. Der Stapelvorgang ist beendet, wenn ein Stapel S mit n Gegenständen B gebildet ist. Durch Ansteuerung der Stellvorrichtungen 8, 8' lassen sich die Greifer 7, 7' in ihre Freigabestellung überführen, und durch Ansteuerung der Anschläge 10 und 10' kann der aus n Gegenständen B bestehende Stapel S über die Fördervorrichtung 9 aus dem Geräterahmen 1 herausgefordert werden.

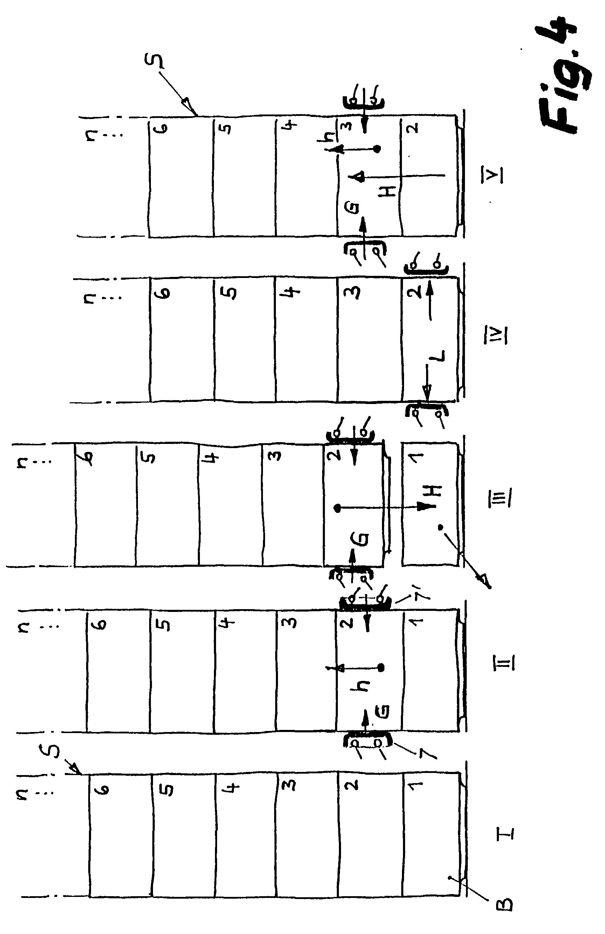

Die Entstapelung (Trennung) eines aus n Gegenständen B bestehenden Stapels S in einzelne Gegenstände B zeigt Figur 4 in fünf Schritten (Situationen I bis V). Der Stapel S wird über die Fördervorrichtung 9 in den Stapelbereich SB des Geräterahmens 1 (vgl. Figur 1) verbracht. Damit dies möglich ist, muß das Verbindungsteil 1c, welches die beiden Rahmenteile 1b, 1b' versteifend miteinander verbindet, auf der Auslaufseite der Vorrichtung angeordnet sein. Beim Stapeln befindet sich dieses Verbindungsteil 1c zwangsläufig dann auf der Einlaufseite. Der Entstapelvorgang kann beginnen, wenn die Greifer 7, 7', wie dies die Situation II zeigt, in ihre Eingriffsstellung G (Greifen und Pressen) im Bereich des Gegenstandes 2 verbracht sind. Alsdann erfolgt ein Anheben der Gegenstände 2 bis n mit einem relativ kleinen Hub h. Nach Vollzug dieses Hubes h ergibt sich die Situation III. Nunmehr kann der Gegenstand 1 nach Ansteuerung der Anschläge 10, 10' aus der Vorrichtung über die Fördervorrichtung 9 ausgebracht werden. Im Anschluß daran erfolgt ein Absenken des Stapels S, bestehend aus den Gegenständen 2 bis n, um den Hub H. Sobald sich der Gegenstand 2 auf der Fördervorrichtung 9 abstützt, werden die Greifer 7, 7' in ihre Freigabestellung (Lösen L) überführt (Situation IV). Dies kann durch Verfahren der Greifer 7, 7' in Verbindung mit ihren Doppellenkern 6a, 6b bzw. 6a', 6b' gegen einen Anschlag oder aber durch Ansteuerung der Stellvorrichtungen 8, 8' erfolgen. Nunmehr werden die Greifer 7, 7' in ihrer Freigabestellung um den Hub H nach oben verfahren (Situation V). Durch anschließendes Aufheben der Ansteuerung der Greifer 7, 7' werden diese in Eingriffsstellung G (Greifen und Pressen) verbracht und durch Heben der Hubvorrichtung 2, 2' um den Hub h wird der Gegenstand 2 freigehoben (vgl. adäquate Situationen II, III). Nunmehr kann der Gegenstand 2 über die Fördervorrichtung 9 aus der Vorrichtung ausgefördert werden. Der Vorgang wiederholt sich sinngemäß in der beschriebenen Weise, bis der Stapel S mit seinen n Gegenständen B abgearbeitet ist.

Durch die einfache Kinematik der Greiferanordnung in Verbindung mit den elektronisch gekoppelten Hubvorrichtungen, die schnell und exakt positionierbar sind, bildet die vorgeschlagene Vorrichtung einen hochleistungsfähigen Stapler bzw. Entstapler. Es hat sich gezeigt, daß die bei der Handhabung im Zuge des Stapelns oder Entstapelns realisierbaren maximalen vertikalen Beschleunigungen lediglich durch das Erreichen der Erdbeschieunigung g begrenzt werden. Dies heißt konkret, daß beim Entstapeln der von den Greifern 7, 7' gegriffene Gegenstand B mit einer Beschleunigung nach unten abgesenkt wird, die etwas kleiner als die Erdbeschleunigung g ist, damit die gegebenenfalls über dem gegriffenen Gegenstand B befindlichen n Gegenstände B nicht abheben. Beim umgekehrten Vorgang, dem Stapeln, muß die nach oben gerichtete Beschleunigung des von den Greifern 7, 7' gegriffenen Gegenstandes B etwas unterhalb der Erdbeschleunigung g bleiben, damit beim Abbremsen der Greifer 7, 7' nach Vollzug der erforderlichen Hubbewegung die gegebenenfalls oberhalb des gegriffenen Gegenstandes B befindlichen weiteren n Gegenstände B nicht abheben. In diesem Zusammenhang hat sich gezeigt, daß die mit der Vorrichtung erreichbare Durchsatzleistung nicht durch die zum Einsatz kommenden Bauteile und Konstruktionselemente, sondern vielmehr durch die vorgenannten physikalischen Gegebenheiten limitiert ist.

## Patentansprüche

1. Vorrichtung zum Stapeln und Entstapeln von Gegenständen, insbesondere Warenbehältern oder Flaschenkästen, von denen mindestens einer seitlich von spiegelbildlich beiderseits eines Stapelbereichs angeordneten Greifern (7;7 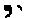 ) erfaßt, angehoben und beim Stapeln auf einen neuen darunter beförderten oder beim Entstapeln auf den frei gewordenen Platz eines darunter wegbeförderten abgesetzt wird, die durch ihr seitliches Verlagern zum Anheben den mindestens einen Gegenstand (B) seitlich erfassen, die in einer Höhe über den noch darunter zu befördernden oder wegzubefördernden positioniert werden und die nach dem Absetzen durch ihr seitliches Verlagern den Gegenstand (B) freigeben, wobei die Greifer (7;7 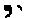 ) über eine Hubvorrichtung (2;2 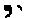 ) in vertikaler Richtung verfahren sowie zwangsläufig in eine und aus einer Eingriffsstellung mit dem Gegenstand (B) bewegt werden, **dadurch gekennzeichnet**,
• daß das seitliche Verlagern der Greifer (7;7 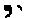 ) zum Anheben durch deren Schwer- und/oder Trägheitskraft erfolgt, so daß sie sich dadurch an dem mindestens einen Gegenstand (B) abstützen,
• daß das seitliche Verlagern der Greifer (7;7 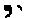 ) nach dem Absetzen auf dem mindestens einen darunter befindlichen Gegenstand (B) durch Abwartsgleiten auf den Längsseiten des Stapels (S) erfolgt,
• daß den Greifern (7;7 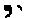 ) auf einer jeden Seite eine eigenständige Hubvorrichtung (2;2 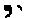 ) zugeordnet ist, die mit der jeweils anderen nicht mechanisch zur Einleitung der Bewegung gekoppelt ist,
• und daß mindestens einem Greifer (7;7 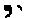 ) eine Stellvorrichtung (8;8 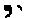 ) zugeordnet ist, mit der die Parallelstellung der zwei spiegelbildlich zueinander angeordneten Greifer (7;7 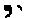 ) sicherzustellen ist.

2. Vorrichtung nach Anspruch 1, **dadurch gekennzeichnet**, daß die Hubvorrichtungen (2;2') derart ansteuerbar sind, daß eine der beiden, mechanisch unabhängig von der anderen, führt und die andere im Rahmen zulässiger Toleranzen sklavisch abhängig folgt.

3. Vorrichtung nach Anspruch 1 oder 2, **dadurch gekennzeichnet**, daß jeder Greifer (7;7') über ein Paar zueinander parallele Doppellenker (6a, 6b; 6a 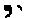 , 6b 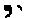 ) an zwei auf jeder Greiferseite vorgesehene, beabstandete Schlitten (5a, 5b; 5a 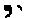 , 5b 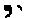 ), die auf den Führungsbahnen (4a, 4b; 4a 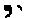 , 4b 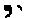 ) bewegbar sind, angelenkt ist.

4. Vorrichtung nach einem der Ansprüche 1 bis 3, **dadurch gekennzeichnet**, daß jedem Greifer (7;7') eine Stellvorrichtung (8;8') zugeordnet ist, über die er zwangsläufig in die und aus der Eingriffsstellung verbringbar ist.

5. Vorrichtung nach einem der Ansprüche 1 bis 4, **dadurch gekennzeichnet**, daß jeder Greifer (7;7') in Verbindung mit seiner Führungs- und Hubvorrichtung (2 bis 8; 2' bis 8') in einem Rahmenteil (1b; 1b 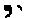 ) angeordnet ist, und daß die Rahmenteile (1b; 1b 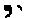 ) auf einem Bodenteil (1a) parallel und mit, insbesondere in Stufen, veränderbarem Abstand zueinander angeordnet sind.

6. Vorrichtung nach Anspruch 5, **dadurch gekennzeichnet**, daß die Rahmenteile (1b; 1b 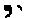 ) auf dem Bodenteil (1a) verfahrbar geführt angeordnet sind.

7. Vorrichtung nach einem der Ansprüche 1 bis 8, **dadurch gekennzeichnet**, daß die Greifer (7;7') mehr als einen Stapel (S) gleichzeitig erfassen und handhaben.
